# EUROPÄISCHE PATENTSCHRIFT

(11) **EP 2 840 252 B1**
(45) Veröffentlichungstag und Bekanntmachung des Hinweises auf die Patenterteilung: **24.10.2018**
(21) Anmeldenummer: 14179563.3
(22) Anmeldetag: 01.08.2014
(51) Int. Cl.: F02N 7/00, F16H 61/42, F02N 11/08

(54) **Hydrostatisches Triebwerk**
Hydrostatic motor
Moteur hydrostatique

(30) Priorität: 22.08.2013 DE 102013109110; 17.09.2013 DE 102013110239
(43) Veröffentlichungstag der Anmeldung: 25.02.2015
(73) Patentinhaber: Linde Hydraulics GmbH & Co. KG, 63743 Aschaffenburg (DE)
(72) Erfinder: Krittian, Lukas, 63739 Aschaffenburg (DE); Langen, Dr., Alfred, 63762 Großostheim (DE); Lasaar, Dr., Rolf, 63762 Großostheim (DE); Löffler, Thomas, 63857 Waldaschaff (DE)
(74) Vertreter: Patentship Patentanwaltsgesellschaft mbH

(56) Entgegenhaltungen:
- EP-A1- 2 308 795
- DE-A1- 2 542 244
- DE-A1- 3 247 335
- US-A- 3 106 057

## Beschreibung

Die Erfindung betrifft ein hydrostatisches Triebwerk, das als Verstellmaschine mit einem verstellbaren, insbesondere stufenlos verstellbaren, Verdrängervolumen ausgebildet ist und als Pumpe und Motor betreibbar und mit einem Verbrennungsmotor trieblich verbunden ist, wobei das Triebwerk im Pumpenbetrieb mit einer Saugseite Druckmittel aus einem Behälter ansaugt und in eine Förderseite fördert und wobei das Triebwerk im Motorbetrieb als hydraulischer Starter zum Starten des Verbrennungsmotors ausgebildet ist, wobei dem Triebwerk im Motorbetrieb an der Saugseite Druckmittel aus einem Druckmittelspeicher zuführbar ist, wobei das Verdrängervolumen des Triebwerks mittels einer Verdrängervolumenstelleinrichtung einstellbar ist, die mit einer aus einem Speisedruckkreis mit Druckmittel versorgten Stellkolbeneinrichtung betätigbar ist.

Derartige hydrostatische Triebwerke, die im Pumpenbetrieb, in dem das Triebwerk von dem laufenden Verbrennungsmotor angetrieben ist, zum Laden eines Druckmittelspeichers und/oder zur Versorgung von mindestens einem Verbraucher mit Druckmittel dienen, und im Motorbetrieb einen hydraulischen Starter zum Starten des abgestellten Verbrennungsmotor dienen, werden in Fahrzeugen, beispielsweise Kraftfahrzeugen, Lastkraftwagen oder Bussen, und in mobilen Arbeitsmaschinen oder Baumaschine, beispielsweise Flurförderzeuge, Landmaschinen, Forstmaschinen, Baggern, Rad- und Teleskopladern, Schleppern, Mähdreschern, Feldhäcksler, Zuckerrüben- oder Kartoffelroder, eingesetzt.

Um den Kraftstoffverbrauch bei im Leerlauf laufenden Verbrennungsmotor, beispielsweise während Wartezeiten, Arbeitspausen oder Arbeitsunterbrechungen, zu verringern, ist eine Start-Stopp-Funktion für den Verbrennungsmotor vorgesehen, bei der der unbelastete Verbrennungsmotor in Wartezeiten, Arbeitspausen oder bei Arbeitsunterbrechungen abgeschaltet wird und bei einer Drehmomentanforderung durch eine Arbeitsfunktion oder den Fahrantrieb automatisch wieder gestartet wird. Mit einem hydraulischen Starter kann eine derartige Start-Stopp-Funktion des Verbrennungsmotors in robuster und zuverlässiger Weise erzielt werden.

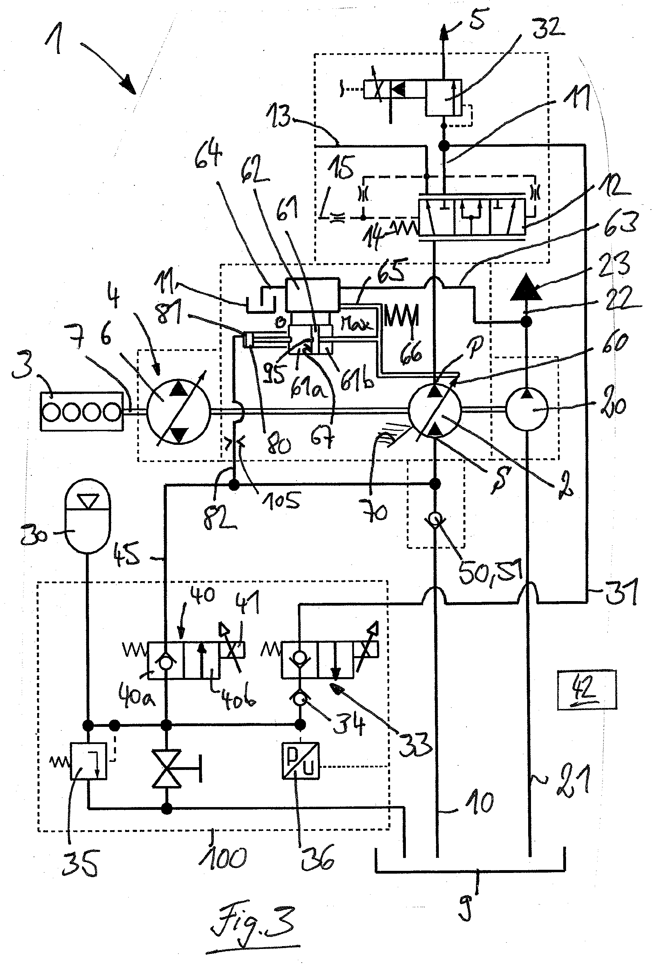

Aus der US 3 106 057 A ist ein hydrostatisches Triebwerk bekannt, das als Verstellmaschine mit einem stufenlos verstellbaren Verdrängervolumen ausgebildet ist und als Pumpe und Motor betreibbar und mit einem Verbrennungsmotor trieblich verbunden ist. Das Triebwerk saugt im Pumpenbetrieb Druckmittel mit einer Saugseite aus einem Behälter an und fördert und an einer Förderseite in eine zu mindestens einem Verbraucher geführte Förderleitung. Im Motorbetrieb, in dem Triebwerk als Starter des Verbrennungsmotors dient, wird dem Triebwerk an der Förderseite Druckmittel aus einem Druckmittelspeicher zugeführt. Das Triebwerk weist somit im Motorbetrieb und im Pumpenbetrieb die gleiche Hochdruckseite auf, die von der Förderseite gebildet ist. Um bei einem derartigen Triebwerk einen Pumpen- und Motorbetrieb zu erzielen, ist das Triebwerk ausgehend von einer Neutralstellung in zwei gegenüberliegende Stellrichtungen verstellbar auszuführen, nämlich eine erste Stellrichtung für den Motorbetrieb (Figur 3) und eine zweite, gegenüberliegende Stellrichtung für den Pumpenbetrieb (Figur 5). Zur Verstellung des Triebwerks in die erste Stellrichtung für den Motorbetrieb ist ein erster Stellkolben vorgesehen und zur Verstellung des Triebwerks in die zweite Stellrichtung für den Pumpenbetrieb ein zweiter Stellkolben. Es ist ein weiterer, dritter Stellkolben vorgesehen, der nur im Pumpenbetrieb aktiv ist und bewirkt, dass das Triebwerk im Pumpenbetrieb durch Zurpckschwenken der Schrägschiebe an der Förderseite einen konstanten Druck fördert.

Aus der EP 2 308 795 A1 ist ein gattungsgemäßes hydrostatisches Triebwerk bekannt, das im Pumpenbetrieb, wobei das von einem Verbrennungsmotor angetriebene Triebwerk mit einer Saugseite Druckmittel aus einem Behälter ansaugt, zur Versorgung der Verbraucher einer Arbeitshydraulik mit Druckmittel sowie über eine Ladeschaltung zum Laden eines Druckmittelspeichers dient. In einem Motorbetrieb wird dem Triebwerk an der Saugseite über eine Entladeschaltung unter Druck stehendes Druckmittel aus dem Druckmittelspeicher zugeführt und das Triebwerk von dem aus dem Druckmittelspeicher zugeführten Druckmittel angetrieben. Von dem im Motorbetrieb betriebenen Triebwerk wird hierdurch ein zusätzliches Drehmoment an der Kurbelwelle des Verbrennungsmotors erzeugt. Das im Motorbetrieb betrieben Triebwerk kann hierdurch als hydraulischer Starter zum Starten des abgestellten Verbrennungsmotors und/oder als Booster-Antrieb zur Unterstützung des laufenden Verbrennungsmotors eingesetzt werden.

Sofern das Triebwerk als Verstellmaschine mit einem stufenlos verstellbaren Verdrängervolumen ausgebildet ist, ist im Motorbetrieb des als hydraulischen Starter verwendeten Triebwerks die Verdrängervolumenstelleinrichtung des Triebwerks für den Startvorgang des abgestellten Verbrennungsmotors in Richtung einer Erhöhung des Verdrängervolumens, beispielsweise auf eine Stellung mit maximalem Verdrängervolumen, zu verstellen, um im Motorbetrieb des Triebwerks durch das aus dem Druckmittelspeicher der Saugseite zuströmenden Druckmittel ein entsprechendes Drehmoment zum Starten des Verbrennungsmotors erzeugen zu können und die Abgabe eines ausreichend großen Drehmoments zum Starten des Verbrennungsmotors zu ermöglichen. Als Verstellmaschinen ausgebildete hydrostatische Verdrängermaschinen, die im offenen Kreislauf als Pumpen betrieben sind, sind in der Regel von einer Federeinrichtung in Richtung eines minimalen Verdrängervolumens beaufschlagt, um bei einem normalen Startvorgang des Verbrennungsmotors über eine elektrischen Starter ein möglichst geringes Schleppmoment aufzubauen.

Bei einer im Verdrängervolumen verstellbaren Verstellmaschine ist das Verdrängervolumen mittels einer Verdrängervolumenstelleinrichtung einstellbar, die mittels einer Stelleinrichtung betätigbar ist, wobei die Stelleinrichtung zur Versorgung mit Druckmittel an einen Speisedruckkreis angeschlossen ist. Bei abgeschaltetem Verbrennungsmotor steht jedoch im Speisedruckkreis kein Speisedruck und Volumenstrom zur Verfügung.

Aus der EP 2 308 795 A1 (Figur 2) ist zum Verstellen des Triebwerks bei abgeschaltetem Verbrennungsmotor für den Startvorgang des Verbrennungsmotor bekannt, eine das Verdrängervolumen steuernde Verstellvorrichtung des Triebwerks, die zu einer Stelleinrichtung der Verdrängervolumenstelleinrichtung gehört, mit dem Druckmittelspeicher zu verbinden, so dass die Verdrängervolumenstelleinrichtung des Triebwerks bei abgestelltem Verbrennungsmotor mit dem Druckmittel aus dem Druckmittelspeicher betätigt werden kann, um das Triebwerk zum Starten des Verbrennungsmotors durch den Motorbetrieb des Triebwerks ausgehend von der Stellung mit minimalen Verdrängervolumen in Richtung einer Erhöhung des Verdrängervolumens verstellen zu können. Hierzu ist der Druckmittelspeicher über ein Druckminderventil mit einem Speisedruckkreis verbunden, der bei laufendem Verbrennungsmotor zur Versorgung des Stellsystems der Verdrängervolumenstelleinrichtung des Triebwerks mit Druckmittel dient. Mit dem Druckminderventil wird der im Druckmittelspeicher anstehende Druck auf das Speisedruckniveau des Speisedruckkreises abgesenkt, um die Verdrängervolumenstelleinrichtung bei abgestelltem Verbrennungsmotor verstellen zu können.

Die Stelleinrichtung der Verdrängervolumenstelleinrichtung der EP 2 308 795 A1 ist auf das Speisedruckniveau des Speisedruckkreises im Niederdruckbereich von ca. 20 bis 30 bar ausgelegt. Im aufgeladenen Druckspeicher stehen jedoch Drücke im Mitteldruckbereich bzw. Hochdruckbereich von mindestens 100bar an. Um das als Verstellmaschine ausgebildete Triebwerk bei abgeschaltetem Verbrennungsmotor im Verdrängervolumen mit dem Druckmittel aus dem Druckmittelspeicher verstellen zu können, ist somit ein zusätzliches Druckminderventil erforderlich, um das in dem Druckmittelspeicher vorhandene Druckniveau auf das Niveau des Speisedruckkreises zur Versorgung des Stellsystems des Triebwerks herabzusetzen. Ein derartiges Druckminderventil verursacht jedoch zusätzliche Kosten und benötigt aufgrund einer bauraumintensiven Bauweise einen hohen Platzbedarf.

Sofern von dem Speisedruckkreis zusätzlich zu dem Stellsystem der Verstellmaschine weitere Verbraucher versorgt werden, ist zudem ein Sperrventil, beispielsweise ein in Richtung zum Speisedruckkreis sperrendes Rückschlagventil, erforderlich, um ein Ablaufen bzw. Abströmen des aus dem Druckmittelspeicher über das Druckminderventil erzeugten Speisedruckes, mit dem die Stelleinrichtung der Verstellmaschine zum Verstellen der Verdrängervolumenstelleinrichtung bei abgeschaltetem Verbrennungsmotor zu einem Startvorgang des abgestelltem Verbrennungsmotors versorgt wird, zu den weiteren Verbrauchern des Speisedruckkreises und einem Behälter zu verhindern.

Aufgrund der Auslegung der Stelleinrichtung auf das Speisedruckniveau des Speisedruckkreises und somit das Niederdruckniveau weist eine Stellkolbeneinrichtung, die mit der Verdrängervolumenstelleinrichtung zu deren Betätigung und Verstellung in Wirkverbindung steht, eine große druckbeaufschlagte Kolbenfläche auf, um die erforderlichen Kräfte zum Verstellen der Verdrängervolumenstelleinrichtung erzeugen zu können, so dass sich großvolumige Stellkolbendruckräume an der Stellkolbeneinrichtung ergeben. Zum Verstellen der Verdrängervolumenstelleinrichtung des Triebwerks auf das maximale Verdrängervolumen zum Start des abgestellten Verbrennungsmotors ist somit eine, in Bezug auf die Menge für einen Startvorgang des Verbrennungsmotors durch den Motorbetrieb des Triebwerks, relativ große Druckmittelmenge erforderlich, die zum Verstellen des Triebwerks zum Start des abgeschalteten Verbrennungsmotors aus dem Druckmittelspeicher entnommen wird. Durch diese zum Verstellen des Triebwerks aus dem Druckmittelspeicher entnommene Druckmittelmenge sinkt der im Druckmittelspeicher anstehende Druck ab, so dass das im Motorbetrieb des Triebwerks abgebbare Drehmoment, das von dem im Druckmittelspeicher anstehenden Druck abhängt, zum Starten des Verbrennungsmotors reduziert wird.

Ein weiterer Nachteil der Versorgung der Stelleinrichtung über ein Druckminderventil aus dem Druck im Druckmittelspeicher besteht darin, dass die Stellzeit zum Verstellen des Verdrängervolumens des Triebwerks direkt proportional zur benötigten Druckmittelmenge der Stellkolbeneinrichtung und dem Druckmittelvolumenstrom vom Druckmittelspeicher zu dem Stellkolbendruckraum der Stellkolbeneinrichtung. Durch die auf das Speisedruckniveau ausgelegte Stelleinrichtung und Stellkolbeneinrichtung ist somit eine entsprechende Zeitspanne abzuwarten, in der bei abgeschaltetem Verbrennungsmotor das Triebwerk auf das maximale Verdrängervolumen verstellt wird, bevor durch den Motorbetrieb des Triebwerks ein ausreichendes Drehmoment zum Starten des abgeschalteten Verbrennungsmotors erzeugt werden kann, wodurch sich der Startvorgang des Verbrennungsmotors durch den Motorbetrieb des Triebwerks entsprechend verzögert, was von einem Fahrer des Fahrzeugs als störend empfunden wird.

Der vorliegenden Erfindung liegt die Aufgabe zugrunde, ein hydrostatisches Triebwerk der eingangs genannten Gattung zur Verfügung zu stellen, das bei geringem Bauaufwand einen effektiven Startvorgang des Verbrennungsmotors durch den Motorbetrieb des Triebwerks ermöglicht.

Diese Aufgabe wird erfindungsgemäß dadurch gelöst, dass das Triebwerk als einseitig verstellbares Triebwerk ausgebildet ist, bei dem die Verdrängervolumenstelleinrichtung ausgehend von einer Stellung mit minimalem Verdrängervolumen in eine Stellrichtung auf eine Stellung mit maximalem Verdrängervolumen verstellbar ist, und dass eine Zusatzstellkolbeneinrichtung vorgesehen ist, die mit der Verdrängervolumenstelleinrichtung zum Verstellen des Verdrängervolumens des Triebwerks in Wirkverbindung steht und die unmittelbar von dem in dem Druckmittelspeicher anstehenden Druck beaufschlagbar ist, wobei die Verdrängervolumenstelleinrichtung des Triebwerks von der Stellkolbeneinrichtung und der Zusatzstellkolbeneinrichtung ausgehend von der Stellung mit minimalem Verdrängervolumen in die Stellrichtung verstellbar ist und wobei durch eine Verbindung der Zusatzstellkolbeneinrichtung mit dem Druckmittelspeicher das Triebwerk zum Starten des Verbrennungsmotors in Richtung einer Erhöhung des Verdrängervolumens verstellbar ist. Der erfindungsgemäße Gedanke besteht somit darin, zusätzlich zu der aus dem Speisedruckkreis mit Druck und Druckmittel versorgten Stelleinrichtung und Stellkolbeneinrichtung eine Zusatzstellkolbeneinrichtung vorzusehen, mit der das Verdrängervolumen des Triebwerks bei abgeschaltetem Verbrennungsmotor verstellt werden kann und die direkt und unmittelbar mit dem erhöhten Druckniveau und Druck des Druckmittelspeichers beaufschlagt ist. Durch die direkt mit dem Druck des Druckmittelspeicher beaufschlagte Zusatzstellkolbeneinrichtung ist kein zusätzliches Druckminderventil zum Herabsetzen des Druckes im Druckmittespeicher auf das Speisedruckniveau und kein zusätzliches Sperrventil, das ein Ablaufen bzw. Abströmen des aus dem Druckmittelspeicher über das Druckminderventil erzeugten Speisedrucks in den Speisedruckkreis verhindert, erforderlich, so dass teure und bauraumintensive Ventile entfallen. Das erfindungsgemäße Triebwerk ermöglicht somit mit der Zusatzstellkolbeneinrichtung bei geringem Mehraufwand und geringem zusätzlichen Bauraumbedarf eine Verstellung des Triebwerks bei abgeschaltetem Verbrennungsmotor für den Startvorgang des Verbrennungsmotors durch den Motorbetrieb des Triebwerks. Das Triebwerk ist erfindungsgemäß als einseitig verstellbares Triebwerk ausgebildet und die Verdrängervolumenstelleinrichtung des Triebwerks ist von der Stellkolbeneinrichtung und der Zusatzstellkolbeneinrichtung ausgehend von einer Stellung mit minimalem Verdrängervolumen in eine Stellrichtung verstellbar. Derartige einseitig verstellbare Triebwerke werden im offenen Kreislauf betrieben und ermöglichen bei geringem Bauaufwand und bei geringem Energieverbrauch im Pumpenbetrieb eine Ladebetrieb des Druckmittelspeichers und/oder eine Versorgung angeschlossener Verbraucher mit Druckmittel. Mit der erfindungsgemäßen Zusatzstellkolbeneinrichtung, die gleichfalls wie die bereits vorhandene Stellkolbeneinrichtung das Verdrängervolumen des Triebwerks in Richtung des maximalen Verdrängervolumens verstellt, kann ein derartiges, als einseitig verstellbare Pumpe ausgebildetes Triebwerk auf einfache Weise bei abgestelltem Verbrennungsmotor auf maximales Verdrängervolumen verstellt werden, um in einem Motorbetrieb, wobei das Triebwerk an der Saugseite mit Druckmittel aus dem Druckmittelspeicher angetrieben wird, den abgeschalteten Verbrennungsmotor starten zu können.

Besondere Vorteile ergeben sich, wenn gemäß einer Ausführungsform der Erfindung eine druckbeaufschlagte Kolbenfläche der Zusatzstellkolbeneinrichtung gegenüber einer druckbeaufschlagten Kolbenfläche der Stellkolbeneinrichtung verringert ist. Die direkt mit dem Druck aus dem Druckmittelspeicher beaufschlagte Zusatzstellkolbeneinrichtung arbeitet gegenüber der aus dem Speisedruckkreis mit Druck und Druckmittel versorgten Stellkolbeneinrichtung mit einem um ein mehrfach gesteigerten Druckniveau. Gegenüber der aus dem Speisedruckkreis mit Niederdruckniveau beaufschlagten Stellkolbeneinrichtung ist die Zusatzstellkolbeneinrichtung mit dem Mitteldruckniveau oder Hochdruckniveau des Druckmittelspeichers beaufschlagt. Hierdurch kann die druckbeaufschlagte Kolbenfläche und somit der Durchmesser der Zusatzstellkolbeneinrichtung gegenüber der druckbeaufschlagten Kolbenfläche und somit dem Durchmesser der Stellkolbeneinrichtung verringert werden. Die Zusatzstellkolbeneinrichtung benötigt somit aufgrund der geringen druckbeaufschlagten Kolbenfläche nur einen geringen zusätzlichen Bauaufwand. Durch die verringerte druckbeaufschlagten Kolbenfläche der Zusatzstellkolbeneinrichtung reduziert sich weiterhin die zur Verstellung des Triebwerks bei abgeschaltetem Verbrennungsmotor aus dem Druckmittelspeicher zu entnehmende Druckmittelmenge, so dass sich weiterhin der Druck im Druckmittelspeicher lediglich geringfügig absenkt. Das im Druckmittelspeicher verbleibende Druckniveau führt somit zu einem im Motorbetrieb des Triebwerks abgebbaren hohen Drehmoment, das einen effektiven Start des Verbrennungsmotors ermöglicht. Weiterhin führt die durch das gesteigerte Druckniveau verringerte druckbeaufschlagte Kolbenfläche der Zusatzstellkolbeneinrichtung aufgrund der zum Verstellen des Verdrängervolumens des Triebwerks erforderlichen geringen Druckmittelmenge zu einer geringen Stellzeit des Triebwerks bei abgeschaltetem Verbrennungsmotor, so dass ein schneller Startvorgang des Verbrennungsmotors durch den Motorbetrieb des Triebwerks ermöglicht wird.

Besondere Vorteile ergeben sich, wenn gemäß einer Weiterbildung der Erfindung die Zusatzstellkolbeneinrichtung bei einer Verbindung mit dem Druckmittelspeicher die Verdrängervolumenstelleinrichtung auf einen Endanschlag mit maximalem Verdrängervolumen verstellt. Die Zusatzstellkolbeneinrichtung kann somit ohne jegliche erforderliche Steuer- oder Regeleinrichtung gegen einen Endanschlag fahren, wodurch sich eine einfache und kostengünstige konstruktive Gestaltung der Zusatzstellkolbeneinrichtung und eine einfache und kostengünstige Ansteuerung der Zusatzstellkolbeneinrichtung bei einem Startvorgang des abgeschalteten Verbrennungsmotors ergibt.

Mit besonderem Vorteil ist zur Steuerung der Verbindung des Druckmittelspeichers mit der Saugseite des Triebwerks ein Steuerventil, insbesondere ein elektrisch betätigbares Steuerventil, vorgesehen, wobei das Steuerventil gleichzeitig die Verbindung der Zusatzstellkolbeneinrichtung mit dem Druckmittelspeicher steuert. Zweckmäßigerweise ist die Verbindung des Druckmittelspeichers mit der Saugseite des Triebwerks mittels eines elektrisch betätigbaren Steuerventils steuerbar. Mit einem derartigen elektrisch betätigbaren Steuerventil kann auf einfache Weise der Motorbetrieb des Triebwerks bei einem Startvorgang des abgestellten Verbrennungsmotors gesteuert werden. Sofern das Steuerventil weiterhin die Beaufschlagung der Zusatzstellkolbeneinrichtung mit dem Druck aus dem Druckmittelspeicher steuert, wird auf steuerungstechnische einfache Weise erzielt, dass über die Zusatzstellkolbeneinrichtung das Triebwerk für den Startvorgang des Verbrennungsmotors durch den Motorbetrieb des Triebwerks auf maximales Verdrängervolumen verstellt wird.

Zweckmäßigerweise sind zu einem Startvorgang des abgestellten Verbrennungsmotors durch den Motorbetrieb des Triebwerks mittels des Steuerventils die Saugseite des Triebwerks mit dem Druckmittelspeicher verbunden und die Zusatzstellkolbeneinrichtung mit dem Druckmittelspeicher verbunden. Das Steuerventil, das für den Startvorgang des abgestellten Verbrennungsmotors durch den Motorbetrieb des Triebwerks die Saugseite des Triebwerks mit dem Druckmittelspeicher verbindet, schaltet somit parallel den Druck des Druckmittelspeichers auf die Zusatzstellkolbeneinrichtung. Hierdurch ergibt sich eine einfache Steuerung des Startvorgangs des abgeschalteten Verbrennungsmotors, da lediglich das Steuerventil entsprechend angesteuert werden muss, um die Saugseite des Triebwerks mit dem Druckmittelspeicher und die Zusatzstellkolbeneinrichtung mit dem Druckmittelspeicher zu verbinden. Sobald das aus dem Druck des Druckmittelspeichers und der über die Zusatzstellkolbeneinrichtung eingestellten Stellung der Verdrängervolumenstelleinrichtung resultierende und von dem im Motorbetrieb des Triebwerks erzeugte Drehmoment die Schlepp- und Losbrechmomente an der Kurbelwelle des Verbrennungsmotors übersteigt, erfolgt automatisch der Startvorgang des Verbrennungsmotors.

Gemäß einer bevorzugten Ausgestaltungsform der Erfindung steht der Druckmittelspeicher mit der Saugseite des Triebwerks mittels einer Verbindungsleitung in Verbindung, in der das Steuerventil angeordnet ist, wobei zur Beaufschlagung der Zusatzstellkolbeneinrichtung mit Druckmittel aus dem Druckmittelspeicher eine Druckmittelleitung vorgesehen ist, die stromab des Steuerventils mit der Verbindungsleitung verbunden ist. Die Zusatzstellkolbeneinrichtung ist somit zwischen dem Steuerventil und der Saugseite des Triebwerks an die Verbindungsleitung angeschlossen. Hierdurch wird auf einfache Weise ermöglicht, dass in einer Steuerstellung des Steuerventils, in der die Verbindungsleitung für einen Startvorgang des abgeschalteten Verbrennungsmotors geöffnet ist, der Druckmittelspeicher mit der Saugseite des Triebwerks und der Zusatzstellkolbeneinrichtung verbunden ist.

Besondere Vorteile ergeben sich, wenn in der zu der Zusatzstellkolbeneinrichtung geführten Druckmittelleitung ein die Verstellgeschwindigkeit der Verdrängervolumenstelleinrichtung beeinflussendes Mittel, insbesondere eine Düse oder eine Drossel, angeordnet ist. Hierdurch kann die Stellgeschwindigkeit der Verdrängervolumenstelleinrichtung beeinflusst und begrenzt werden, um beispielsweise Beschädigungen an dem Endanschlag und an der mit dem Endanschlag zusammenwirkenden Verdrängervolumenstelleinrichtung zu verhindern.

Die Zusatzstellkolbeneinrichtung kann an beliebiger Stelle auf die bereits vorhandene und von dem Speisekreis mit Druckmittel versorgte Stelleinrichtung der Pumpe einwirken. Die Zusatzstellkolbeneinrichtung steht vorteilhafterweise mit der mit der Verdrängervolumenstelleinrichtung in Wirkverbindung stehenden Stellkolbeneinrichtung oder der Verdrängervolumenstelleinrichtung oder einer die Stellkolbeneinrichtung mit der Verdrängervolumenstelleinrichtung verbindenden Stelleinrichtungskomponente in Wirkverbindung steht. Die erfindungsgemäße Zusatzstellkolbeneinrichtung kann somit an einer geeigneten Stelle der bereits vorhandenen Stelleinrichtung eingebaut und ergänzt werden.

Gemäß einer vorteilhaften Ausführungsform der Erfindung ist die Zusatzstellkolbeneinrichtung in axialer Verlängerung der Stellkolbeneinrichtung angeordnet und steht mit der Stellkolbeneinrichtung in Wirkverbindung. Hierdurch werden Vorteile hinsichtlich eines einfachen und bauraumsparenden Einbaus der Zusatzstellkolbeneinrichtung erzielt

Die Zusatzstellkolbeneinrichtung kann gemäß einer vorteilhaften Ausgestaltungsform der Erfindung mit der Stellkolbeneinrichtung oder der Verdrängervolumenstelleinrichtung oder der Stelleinrichtungskomponente über ein formschlüssiges Verbindungsmittel fest verbunden sein. Hierdurch wird auf einfache Weise eine Kopplung der Zusatzstellkolbeneinrichtung mit der mit der Zusatzstellkolbeneinrichtung in Wirkverbindung stehenden und von der Zusatzstellkolbeneinrichtung zu bewegenden Komponente der Stelleinrichtung erzielt und verhindert, dass bei einer Druckbeaufschlagung der Zusatzstellkolbeneinrichtung die Zusatzstellkolbeneinrichtung auf die mit der Zusatzstellkolbeneinrichtung in Wirkverbindung stehende und von der Zusatzstellkolbeneinrichtung zu bewegende Komponente der Stelleinrichtung aufschlägt.

Das formschlüssige Verbindungsmittel ist zweckmäßigerweise als Gelenkverbindung, insbesondere als sphärisches Gelenk oder als Drehgelenk, ausgebildet.

Gemäß einer alternativen Ausgestaltungsform liegt die Zusatzstellkolbeneinrichtung an der Stellkolbeneinrichtung oder der Verdrängervolumenstelleinrichtung oder der Stelleinrichtungskomponente lose an. Hierdurch kann der Bauaufwand verringert werden, da kein formschlüssiges Verbindungsmittel erforderlich, um die Zusatzstellkolbeneinrichtung und die mit der Zusatzstellkolbeneinrichtung in Wirkverbindung stehenden und von der Zusatzstellkolbeneinrichtung zu bewegenden Komponente der Stelleinrichtung zu koppeln.

Um bei einer lose an der zu bewegenden Komponente der Stelleinrichtung anliegenden Zusatzstellkolbeneinrichtung zu verhindern, dass bei einer Druckbeaufschlagung der Zusatzstellkolbeneinrichtung die Zusatzstellkolbeneinrichtung auf die mit der Zusatzstellkolbeneinrichtung in Wirkverbindung stehende und von der Zusatzstellkolbeneinrichtung zu bewegende Komponente der Stelleinrichtung aufschlägt, ist zweckmäßigerweise die Zusatzstellkolbeneinrichtung von einer Federeinrichtung, insbesondere einer Druckfeder, beaufschlagt, die die Zusatzstellkolbeneinrichtung in Anlage an die Stellkolbeneinrichtung oder die Verdrängervolumenstelleinrichtung oder die Stelleinrichtungskomponente hält.

Gemäß einer vorteilhaften Ausgestaltungsform der Erfindung ist die Verdrängervolumenstelleinrichtung mittels einer Federeinrichtung in Richtung eines minimalen Verdrängervolumens beaufschlagt. Bei laufendem Verbrennungsmotor und aufgeladenem Druckmittelspeicher bzw. nicht angesteuerten Verbraucher wird somit auf einfache Weise erzielt, dass sich das Triebwerk im Pumpenbetrieb in der Stellung mit minimalem Verdrängervolumen, bevorzugt einer Stellung mit Verdrängervolumen Null, befindet und geringe Verluste verursacht.

Bevorzugt ist das Triebwerk als Axialkolbenmaschine in Schrägscheibenbauweise ausgebildet.

Die Erfindung betrifft weiterhin einen Antriebsstrang eines Fahrzeugs, insbesondere einer mobilen Arbeitsmaschine, mit einem von einem Verbrennungsmotor angetriebenen, erfindungsgemäßen hydrostatischen Triebwerk, wobei das Triebwerk im Motorbetrieb einen hydraulischen Starter einer Start-Stopp-Funktion des Verbrennungsmotors bildet und im Pumpenbetrieb einen Ladebetrieb des Druckmittelspeichers ermöglicht. Mit dem erfindungsgemäßen hydrostatischen Triebwerk kann im Motorbetrieb des Triebwerks ein effektiver und schneller Startvorgang des abgeschalteten Verbrennungsmotors erzielt werden.

Vorteile ergeben sich, wenn das Triebwerk im Motorbetrieb zusätzlich als hydraulischer Booster-Antrieb dient. Im Motorbetrieb des Triebwerks kann in den Antriebsstrang ein zusätzliches Drehmoment eingeleitet werden, das einen kurzzeitigen Betrieb des Fahrzeugs bei abgeschaltetem Verbrennungsmotor ermöglicht bzw. den laufenden Verbrennungsmotor unterstützt, so dass eine Energieeinsparung ermöglicht wird.

Sofern der Antriebsstrang und das Fahrzeug ein Arbeitshydrauliksystem aufweist, ergeben sich besondere Vorteile, wenn das Triebwerk im Pumpenbetrieb das Arbeitshydrauliksystem des Fahrzeugs mit Druckmittel versorgt. Das erfindungsgemäße Triebwerk dient somit im Pumpenbetrieb zur Versorgung der Arbeitshydraulik des Fahrzeugs und zum Laden des Druckmittelspeichers und im Motorbetreib als hydraulischer Starter einer Start-Stopp-Funktion sowie gegebenenfalls zusätzlich als Booster-Antrieb für den laufenden Verbrennungsmotors.

Die Erfindung betrifft weiterhin ein Fahrzeug mit einem erfindungsgemäßen Antriebsstrang bzw. einem erfindungsgemäßen hydrostatischen Triebwerk.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform der Erfindung,
- Figur 2: eine zweite Ausführungsform der Erfindung und
- Figur 3: eine dritte Ausführungsform der Erfindung.

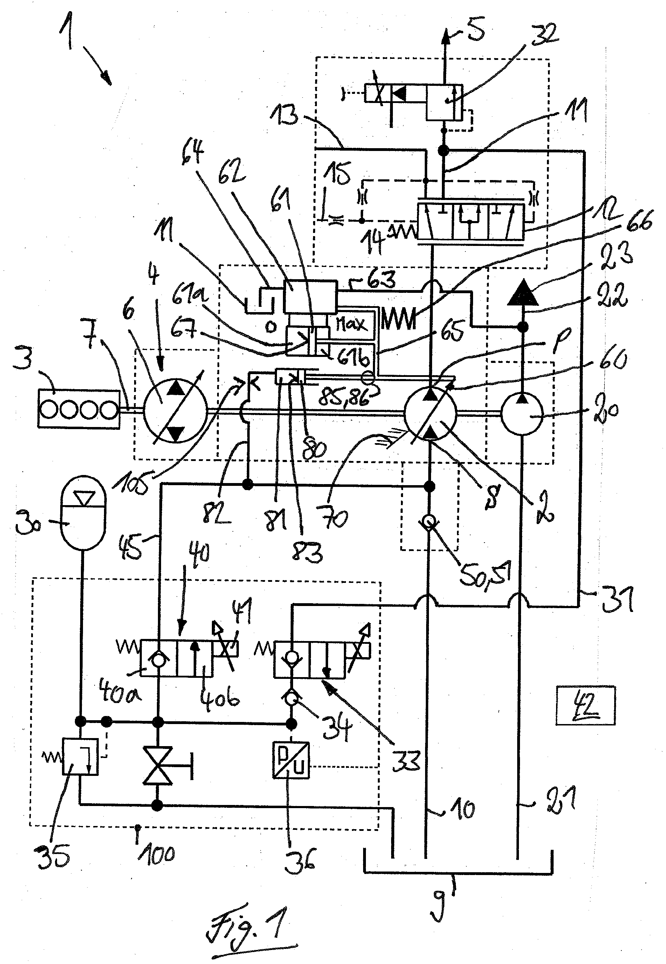

In der Figur 1 ist ein Antriebsstrang 1 eines nicht näher dargestellten Fahrzeugs, beispielsweise einer als Flurförderzeug oder als Bau- bzw. Landmaschine ausgebildeten mobilen Arbeitsmaschine, mit einem erfindungsgemäßen hydrostatischen Triebwerk 2 in einer Prinzipdarstellung dargestellt.

Der Antriebsstrang 1 besteht aus einem Verbrennungsmotor 3, beispielsweise einem Dieselmotor, einem von dem Verbrennungsmotor 3 angetriebenen Fahrantrieb 4 des Fahrzeugs sowie dem mit dem Verbrennungsmotor 3 trieblich verbundenen hydrostatischen Triebwerk 2. Das Triebwerk 2 ist als Verstellmaschine mit einem stufenlos verstellbaren Verdrängervolumen ausgebildet.

Das dargestellte Fahrzeug ist weiterhin mit einem von dem Verbrennungsmotor 3 angetriebenen Arbeitshydrauliksystem 5 versehen.

Der Fahrantrieb 4 ist im dargestellten Ausführungsbeispiel als hydrostatischer Fahrantrieb ausgebildet, der aus einer im Fördervolumen verstellbaren Fahrpumpe 6 besteht, die zum Antrieb mit einer Abtriebswelle 7 des Verbrennungsmotors 3 in trieblicher Verbindung steht. Die Fahrpumpe 6 steht mit einem oder mehreren im Schluckvolumen festen oder verstellbaren, nicht näher dargestellten Hydromotoren, bevorzugt im geschlossenen Kreislauf, in Verbindung, die auf nicht mehr dargestellte Weise mit den angetriebenen Rädern des Fahrzeugs in Wirkverbindung stehen.

Der Fahrantrieb 4 kann alternativ als elektrischer Fahrantrieb mit einem von dem Verbrennungsmotor 3 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Das Arbeitshydrauliksystem 5 umfasst Hydraulikfunktionen bzw. Arbeitsfunktionen des Fahrzeugs, beispielsweise bei einem Flurförderzeug eine Arbeitshydraulik zum Betätigen eines Lastaufnahmemittels an einem Hubmast, bzw. bei einer beispielsweise als Bagger ausgebildeten Baumaschine die Arbeitsfunktionen der von einer Schaufel ausgebildeten Arbeitsausrüstung.

Zur Versorgung des Arbeitshydrauliksystems 5 mit Druckmittel ist im dargestellten Ausführungsbeispiel das als Verstellmaschine mit einem stufenlos verstellbaren Verdrängervolumen ausgebildete hydrostatische Triebwerk 2 vorgesehen, das bevorzugt als Axialkolbenmaschine in Schrägscheibenbauweise ausgebildet ist. Das Triebwerk 2 ist im offenen Kreislauf betrieben und steht zum Antrieb mit der Abtriebswelle 7 des Verbrennungsmotors 3 in trieblicher Verbindung.

Das Triebwerk 2 steht eingangsseitig mit der Saugseite S mittels einer Ansaugleitung 10 mit einem Behälter 9 in Verbindung. Eine ausgangsseitig mit der Förderseite P des Triebwerks 2 in Verbindung stehende Förderleitung 11 ist an eine nicht näher dargestellte Steuerventileinrichtung angeschlossen, mittels der die nicht näher dargestellten hydraulischen Verbraucher des Arbeitshydrauliksystems 5 steuerbar sind. Die Steuerventileinrichtung umfasst bevorzugt ein oder mehrere Wegeventile zur Betätigung der Verbraucher. Im dargestellten Ausführungsbeispiel ist weiterhin ein Prioritätsventil 12 dargestellt, mit dem die bevorzugte Versorgung eines von dem Triebwerk 2 versorgten Verbrauchers, beispielsweise einer hydraulischen Lenkungseinrichtung des Fahrzeugs, sichergestellt werden kann. Das Prioritätsventil 12 ist eingangsseitig mit der Förderseite P des Triebwerks 2 verbunden und steht ausgangsseitig mit der zu dem Arbeitshydrauliksystem 5 geführten Förderleitung 11 sowie einer zu der Lenkungseinrichtung geführten Förderleitung 13 in Verbindung. Das Prioritätsventil 12 ist von einer Feder 14 sowie dem in einer Lastdruckleitung 15 anstehenden Lastdruck der Lenkungseinrichtung gesteuert.

Der Antriebsstrang 1 umfasst weiterhin eine Speisepumpe 20, die zum Antrieb mit der Abtriebswelle 7 in Verbindung steht. Die Speisepumpe 20 ist im dargestellten Ausführungsbeispiel als Konstantpumpe mit einem konstanten Verdrängervolumen ausgebildet, die im offenen Kreislauf betrieben ist. Die Speisepumpe 20 steht hierzu mit der Saugseite über eine Ansaugleitung 21 mit dem Behälter 9 in Verbindung und fördert in eine an die Förderseite angeschlossene Speisedruckleitung 22, an die die entsprechenden Verbraucher eines Speisedruckkreises 23 angeschlossen sind, beispielsweise Verstelleinrichtungen zur Verstellung des Verdrängervolumens der Fahrpumpe 6 und des als Verstellmaschine ausgebildeten Triebwerks 2, eine Einspeisevorrichtung des hydrostatischen Fahrantriebs, eine Bremsanlage des Fahrzeugs und Vorsteuerventile für die Steuerventile des Arbeitshydrauliksystems 5. Bei laufendem Verbrennungsmotor 3 erzeugt die Speisepumpe 20 einen konstanten Speisedruck in dem Speisedruckkreis 23. Zur Absicherung des Speisedruckes in dem Speisedruckkreis 23 ist der Speisedruckleitung 22 eine nicht näher dargestellte Druckbegrenzungseinrichtung, beispielsweise ein Druckbegrenzungsventil, zugeordnet.

Das erfindungsgemäße Triebwerk 2 ist als Zweiquadrantentriebwerk ausgebildet, das bei gleicher Drehrichtung und gleicher Durchflussrichtung des Druckmittels als Pumpe und Motor betreibbar ist.

Im Pumpenbetrieb, wobei das Triebwerk 2 von dem laufenden Verbrennungsmotor 3 angetrieben wird, saugt das Triebwerk 2 über die Saugseite S Druckmittel aus dem Behälter 9 an und fördert das Druckmittel in die Förderseite P und somit über das Prioritätsventil 12 in die Förderleitung 11 des Arbeitshydrauliksystems 5 bzw. die Förderleitung 13 der Lenkungseinrichtung.

Im Motorbetrieb des Triebwerks 2, in der das Triebwerk 2 als hydraulischer Starter einer Start-Stopp-Funktion zum Starten des abgeschalteten Verbrennungsmotors 2 ausgebildet ist, wird das Triebwerk 2 an der Saugseite S mit Druckmittel aus einem Druckmittelspeicher 30 angetrieben.

Der Druckmittelspeicher 30 ist zum Laden mit Druckmittel an die Förderseite P des Triebwerks 2 angeschlossen. Im dargestellten Ausführungsbeispiel ist zum Laden des Druckmittelspeichers 30 der Druckmittelspeicher 30 an die zu dem Arbeitshydrauliksystem 4 geführte Förderleitung 11 des Triebwerks 2 mittels einer Verbindungsleitung 31 angeschlossen.

In der Förderleitung 11 ist ein elektrisch betätigbares Ladeventil 32 angeordnet, das bei einer Ansteuerung in eine die Förderleitung 11 drosselnde Drosselstellung zum Aufstauen eines Druckes betätigbar ist. Das Ladeventil 32 ist bevorzugt als Retarderventil ausgeführt, das im Bremsbetrieb des Fahrzeugs in eine Drosselstellung betätigt wird, um durch Aufstauen eines Druckes in der Förderleitung 11 ein zusätzliches, abbremsendes Drehmoment an der von der Kurbelwelle gebildeten Abtriebswelle 7 aufzuprägen, welches dem motorisch wirkenden Drehmoment an der Fahrpumpe 6 entgegenwirkt und so das Fahrzeug abbremst. In einem derartigen Bremsbetrieb bei drosselndem Retarderventil kann zudem auf einfache Weise eine Energierückgewinnung erfolgen und der Druckmittelspeicher 30 geladen werden, so dass zum Laden des Druckmittelspeichers 30 die kinetische Energie des Fahrzeugs während eines Bremsvorgangs dient. Die Verbindungsleitung 31 ist hierbei stromauf des Ladeventils 32 und somit zwischen dem Ladeventil 32 und dem Prioritätsventil 12 an die Förderleitung 11 angeschlossen.

Zum Laden des Druckmittelspeichers 30 kann alternativ das im Pumpenbetrieb arbeitende Triebwerk 2 primärseitig von dem laufenden Verbrennungsmotor 3 angetrieben werden.

In der Verbindungsleitung 31 ist eine Ladeventileinrichtung 33 angeordnet, die ein in Richtung zum Druckmittelspeicher 30 öffnendes Rückschlagventil 34 umfasst. Weiterhin ist der Verbindungsleitung 31 zwischen der Ladeventileinrichtung 33 und dem Druckmittelspeicher 30 ein Druckbegrenzungsventil 35 zur Absicherung des Druckes in dem Druckmittelspeicher 30 zugeordnet.

Dem Druckmittelspeicher 30 ist weiterhin ein Drucksensor 36 zugeordnet. Der Drucksensor 36 dient zur Überwachung des Ladedruckes und somit des Ladezustands des Druckmittelspeichers 30.

Die Verbindung des Druckmittelspeichers 30 mit der Saugseite S des Triebwerks 2 für den Motorbetrieb des Triebwerks 2 ist mittels eines elektrisch betätigbaren Steuerventils 40 steuerbar. Das Steuerventil 40 weist eine Sperrstellung 40a und eine Durchflussstellung 40b auf, wobei die Sperrstellung 40a bevorzugt leckagedicht ausgeführt ist mit einem in Richtung zum Triebwerk 2 sperrenden Sperrventil. Das Steuerventil 40 ist als elektrisch betätigbares Steuerventil, bevorzugt Schaltventil, ausgebildet, das mittels einer elektrischen Betätigungseinrichtung 41, beispielsweise einem Schaltmagnet, zwischen der Sperrstellung 40a und der Durchflussstellung 40b betätigbar ist.

Die Betätigungseinrichtung 41 steht zur Ansteuerung mit einer elektronischen Steuereinrichtung 42 in Verbindung. Die Steuereinrichtung 42 steht weiterhin mit dem Drucksensor 36 in Verbindung. Weiterhin steht die elektronische Steuereinrichtung 42 mit einer nicht näher dargestellten, die Drehzahl des Verbrennungsmotors 3 erfassenden Drehzahlsensoreinrichtung in Verbindung. Die Steuereinrichtung 42 kann zudem das Ladeventil 32 und die Ladeventileinrichtung 33 für den Ladebetrieb des Druckmittelspeichers 30 ansteuern.

Das Steuerventil 40 ist in einer Verbindungsleitung 45 angeordnet, die von dem Druckmittelspeicher 30 zu der zur Saugseite S des Triebwerks 2 geführten Ansaugleitung 10 geführt ist. Die mit der Ladeventileinrichtung 33 versehene Verbindungsleitung 31 ist hierbei zwischen dem Steuerventil 40 und dem Druckmittelspeicher 30 an die Verbindungsleitung 45 angeschlossen.

In der Ansaugleitung 10 des Triebwerks 2 ist ein in Richtung zum Behälter 9 sperrendes Sperrventil 50 angeordnet, das bevorzugt als ein in Richtung zum Behälter sperrendes Rückschlagventil 51 ausgebildet ist. Das Sperrventil 50 verhindert im Motorbetrieb ein Abströmen des von dem Druckmittelspeicher 30 zur Saugseite S des Triebwerks 2 strömenden Druckmittels in den Behälter 9 und ermöglicht einen Druckaufbau an der Saugseite S des Triebwerks 2 für den Motorbetrieb.

Das als Verstellmaschine mit stufenlos veränderbarem Verdrängervolumen ausgebildete Triebwerk 2 weist zur Einstellung des Verdrängervolumens eine Verdrängervolumenstelleinrichtung 60 auf, beispielsweise eine in der Neigung verstellbare Schrägscheibe einer Axialkolbenmaschine in Schrägscheibenbauweise. Die Verdrängervolumenstelleinrichtung 60 umfasst zur Betätigung eine mit der Verdrängervolumenstelleinrichtung 60 in Wirkverbindung stehende Stelleinrichtung, die eine mit der Verdrängervolumenstelleinrichtung 60 in Wirkverbindung stehende Stellkolbeneinrichtung 61 umfasst.

Das erfindungsgemäße Triebwerk 2 ist als einseitig verstellbares Triebwerk ausgebildet, bei dem die Verdrängervolumenstelleinrichtung 60 ausgehend von einer Stellung mit minimalem Verdrängervolumen, bevorzugt einer Stellung mit Verdrängervolumen Null, in eine Stellrichtung bzw. Schwenkrichtung auf eine Stellung mit maximalem Verdrängervolumen verstellbar ist. In der Figur 1 ist ein Endanschlag 70 für das maximale Verdrängervolumen der Verdrängervolumenstelleinrichtung 60 dargestellt. Die Stellkolbeneinrichtung 61 weist einen in Richtung des maximalen Verdrängervolumens wirkenden Stelldruckraum 61a und einen in Richtung des minimalen Verdrängervolumens wirkenden Stelldruckraum 61b auf.

Die Verdrängervolumenstelleinrichtung 60 ist mittels einer Stellventileinrichtung 62 betätigbar, die ebenfalls Bestandteil der Stelleinrichtung ist. Die Stellventileinrichtung 62 weist ein nicht näher dargestelltes Stellventil auf, mit dem die Beaufschlagung der Stelldruckräume 61a, 61b der Stellkolbeneinrichtung 61 mit einem Stelldruck bzw. deren Entlastung zu dem Behälter 9 steuerbar ist.

Die Stellventileinrichtung 62 ist zur Versorgung mit Druckmittel und zur Erzeugung eines Stelldruckes in den Stelldruckräumen 61a bzw. 61b der Stellkolbeneinrichtung 61 über eine Stelldruckleitung 63 mit der Speisedruckleitung 22 und somit dem Speisedruckkreis 23 verbunden. Weiterhin weist die Stellventileinrichtung 62 einen Anschluss an eine zu dem Behälter 9 geführte Behälterleitung 64 auf. In dem dargestellten Ausführungsbeispiel umfasst die Stellventileinrichtung 62 ein Regelventil, wobei eine mechanische Rückmeldung und Rückführung 65 der Ist-Position der Verdrängervolumenstelleinrichtung 60 auf die Stellventileinrichtung 62 vorgesehen ist.

Weiterhin ist eine als Druckfeder ausgebildete Federeinrichtung 66 vorgesehen, die die Verdrängervolumenstelleinrichtung 60 in Richtung des minimalen Verdrängervolumens beaufschlagt, der durch einen entsprechenden nicht näher dargestellten Endanschlag der Verdrängervolumenstelleinrichtung 60 begrenzt werden kann.

Die Stellkolbeneinrichtung 61 ist somit mit Druckmittel aus dem Speisedruckkreis 23 bei Speisedruckniveau des Speisedruckkreises 23 versorgbar. Das Speisedruckniveau entspricht einem Niederdruckniveau im Bereich von 20 bis 30 bar.

Um die Verdrängervolumenstelleinrichtung 60 bei einem Startvorgang der Start-Stopp-Funktion des abgestellten Verbrennungsmotors 3 durch den Motorbetrieb des Triebwerks 2 in Richtung der Stellung mit maximalem Verdrängervolumen zu beaufschlagen, ist erfindungsgemäß eine Zusatzstellkolbeneinrichtung 80 vorgesehen. Die Zusatzstellkolbeneinrichtung 80 steht ebenfalls mit der Verdrängervolumenstelleinrichtung 60 zum Verstellen des Verdrängervolumens des Triebwerks 2 in Wirkverbindung und ist unmittelbar von dem in dem Druckmittelspeicher 30 anstehenden Druck beaufschlagbar. Im Druckmittelspeicher 30 steht im geladenen Zustand ein Mitteldruckniveau oder Hochdruckniveau von mindestens 100 bar an.

Die Zusatzstellkolbeneinrichtung 80 ist als einfachwirkender Stellkolben ausgebildet und weist einen in Richtung des maximalen Verdrängervolumens wirkenden Stelldruckraum 81 auf.

Zur Steuerung der Verbindung des Stelldruckraums 81 der Zusatzstellkolbeneinrichtung 80 mit dem Druckmittelspeichers 30 und somit zur Beaufschlagung des Stelldruckraums 81 der Zusatzstellkolbeneinrichtung 80 mit dem Druck des Druckmittelspeichers 30 ist das Steuerventil 40 vorgesehen.

Hierzu ist eine Druckmittelleitung 82 vorgesehen, die mit dem Stelldruckraum 81 der Zusatzstellkolbeneinrichtung 80 verbunden ist und an die Verbindungsleitung 45, die von dem Druckmittelspeicher 30 zu der Saugseite S des Triebwerks 2 geführt ist, stromab des Steuerventils 40 angeschlossen ist.

Die direkte Beaufschlagung der Zusatzstellkolbeneinrichtung 80 mit dem Druck des Druckmittelspeichers 30 ermöglicht es, eine druckbeaufschlagte Kolbenfläche 83 der Zusatzstellkolbeneinrichtung 80 gegenüber einer von dem Speisedruckniveau druckbeaufschlagten Kolbenfläche 67 der Stellkolbeneinrichtung 61 in der Größe zu verringern, um die zum Verstellen der Verdrängervolumenstelleinrichtung 60 erforderlichen Kräfte zu erzeugen.

In dem Ausführungsbeispiel der Figur 1 steht die Zusatzstellkolbeneinrichtung 80 mit der Verdrängervolumenstelleinrichtung 60 in Wirkverbindung.

Die Zusatzstellkolbeneinrichtung 80 ist mit der Verdrängervolumenstelleinrichtung 60 über ein formschlüssiges Verbindungsmittel 85 fest verbunden ist.

Das formschlüssige Verbindungsmittel 85 ist als Gelenkverbindung 86, beispielsweise als sphärisches Gelenk oder als Drehgelenk, ausgebildet, das zwischen einer ausfahrenden Kolbenstange der Zusatzstellkolbeneinrichtung 80 und der Verdrängervolumenstelleinrichtung 60 angeordnet ist.

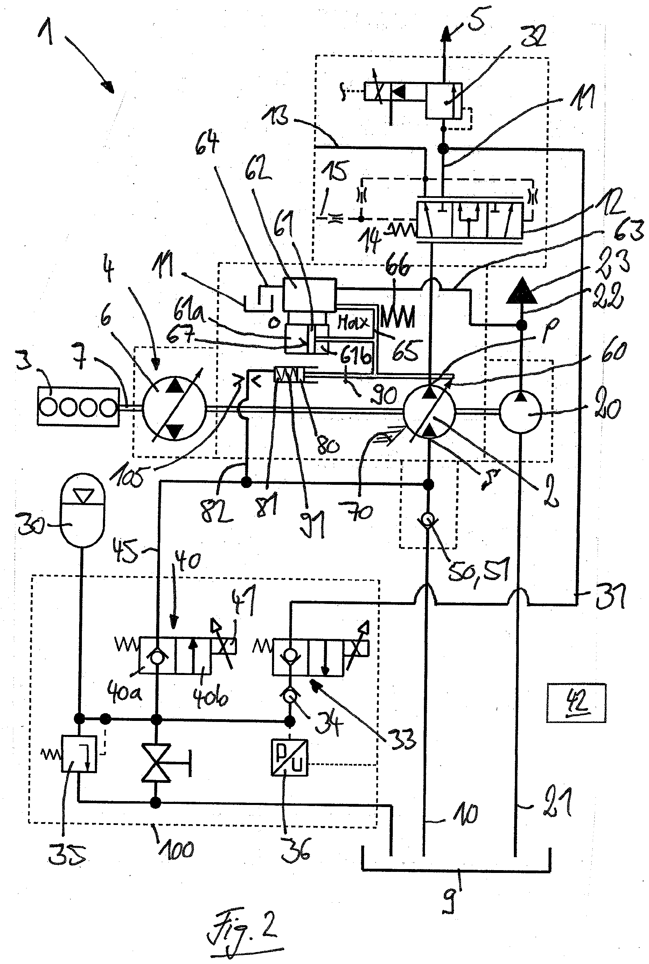

In den Figuren 2 und 3 sind weitere Ausführungsformen der Erfindung dargestellt, wobei gleiche Bauteile mit gleichen Bezugsziffern versehen sind.

Gemäß der Figur 2 liegt die Zusatzstellkolbeneinrichtung 80 an der Verdrängervolumenstelleinrichtung 60 lose an. Zwischen der ausfahrenden Kolbenstange der Zusatzstellkolbeneinrichtung 80 und der Verdrängervolumenstelleinrichtung 60 ist eine Anlagefläche 90 ausgebildet.

Die Zusatzstellkolbeneinrichtung 80 ist von einer Federeinrichtung 91, beispielsweise einer Druckfeder, beaufschlagt, die die Zusatzstellkolbeneinrichtung 80 in Anlage an die Verdrängervolumenstelleinrichtung 60 hält. Im dargestellten Ausführungsbeispiel ist die Federeinrichtung 91 in dem Stelldruckraum 81 der Zusatzstellkolbeneinrichtung 80 angeordnet.

In den Figuren 1 und 2 ist die Zusatzstellkolbeneinrichtung 80 getrennt von der Stellkolbeneinrichtung 61 angeordnet.

Bei der Figur 3 ist die Zusatzstellkolbeneinrichtung 80 in axialer Verlängerung der Stellkolbeneinrichtung 61 angeordnet und steht mit der Stellkolbeneinrichtung 61 in Wirkverbindung. Die Zusatzstellkolbeneinrichtung 80 ist bevorzugt koaxial zu der Stellkolbeneinrichtung 61 angeordnet, wobei sich die ausfahrende Kolbenstange der Zusatzstellkolbeneinrichtung 80 in den Stelldruckraum 61a erstreckt und auf den Stellkolben der Stellkolbeneinrichtung 61 wirkt. In dem Stellkolben der Stellkolbeneinrichtung 61 kann eine Zentrierung 95 für die Kolbenstange der Zusatzstellkolbeneinrichtung 80 ausgebildet sein. Die Zusatzstellkolbeneinrichtung 80 kann alternativ von mehreren Zusatzstellkolben gebildet sein, beispielsweise zwei oder mehr auf einem Teilkreis angeordneten Zusatzkolben, die auf die Stellkolbeneinrichtung 61 wirken.

Um ein Anliegen der Zusatzstellkolbeneinrichtung 80 an dem Stellkolben der Stellkolbeneinrichtung 61 zu erzielen, kann die ausfahrende Kolbenstange der Zusatzstellkolbeneinrichtung 80 gemäß der Figur 1 mit dem Stellkolben der Stellkolbeneinrichtung 61 über ein formschlüssiges Verbindungsmittel fest befestigt sein. Alternativ kann die ausfahrende Kolbenstange der Zusatzstellkolbeneinrichtung 80 gemäß der Figur 2 lose an dem Stellkolben der Stellkolbeneinrichtung 61 anliegen und eine Druckfeder vorgesehen werden, die die Kolbenstange der Zusatzstellkolbeneinrichtung 80 in Anlage an den Stellkolben der Stellkolbeneinrichtung 61 hält.

Zum Starten des abgeschalteten Verbrennungsmotors 3 durch einen Motorbetrieb des Triebwerks 2 wird von der Steuereinrichtung 42 das Steuerventil 40 in die Durchflussstellung 40b aufgesteuert, so dass das Steuerventil 40 die Saugseite S des Triebwerks 2 mit dem Druckmittelspeicher 30 verbindet und die Zusatzstellkolbeneinrichtung 80 mit dem Druckmittelspeicher 30. Das Steuerventil 40, das die Saugseite S des Triebwerks 2 mit dem Druckmittelspeicher 30 für den Motorbetrieb verbindet, schaltet somit parallel den Druck des Druckmittelspeichers 30 auf den Stelldruckraum 81 der Zusatzstellkolbeneinrichtung 80. Hierdurch wird von der Zusatzstellkolbeneinrichtung 80 die Verdrängervolumenstelleinrichtung 60 des Triebwerks 2 an den Endanschlag 70 für das maximale Verdrängervolumen verstellt. Sobald das aus dem Druck des Druckmittelspeichers 30 an der Saugseite S des Triebwerks 2 und der Stellung der Verdrängervolumenstelleinrichtung 60 resultierende Drehmoment des im Motorbetrieb betriebenen Triebwerks 2 die Schlepp- und Losbrechmomente an der Abtriebswelle 7 des Verbrennungsmotors 3 übersteigt, startet der Verbrennungsmotor 3.

Aufgrund der geringen Kolbenfläche 83 der Zusatzstellkolbeneinrichtung 80 ergibt sich eine kurze Stellzeit zum Verstellen der Verdrängervolumenstelleinrichtung 60 auf das maximale Verdrängervolumen, so dass sich ein kurzer und schneller Startvorgang durch den Motorbetrieb des Triebwerks 2 erzielen lässt. Zudem wird zum Betätigen der Verdrängervolumenstelleinrichtung 60 auf das maximale Verdrängervolumen von der Zusatzstellkolbeneinrichtung 80 lediglich eine geringe Druckmittelmenge aus dem Druckmittelspeicher 30 entnommen, so dass das Druckniveau in dem Druckmittelspeicher 30 lediglich geringfügig absinkt und somit ein hohes Drehmoment von dem Triebwerk 2 im Motorbetrieb für einen effektiven Startvorgang des Verbrennungsmotors 3 erzeugt werden kann.

In den Figuren 1 bis 3 ist weiterhin ein gegebenenfalls vorhandenes und die Verstellgeschwindigkeit der Verdrängervolumenstelleinrichtung 60 beeinflussendes Mittel 105, beispielsweise eine Düse oder eine Drossel, dargestellt, das in der zu der Zusatzstellkolbeneinrichtung 80 geführten Druckmittelleitung 82 angeordnet ist und mit dem die Verstellgeschwindigkeit der Verdrängervolumenstelleinrichtung 60 bei einer Druckbeaufschlagung der Zusatzstellkolbeneinrichtung 80 beeinflusst und begrenzt werden kann. Beim Verstellen der Verdrängervolumenstelleinrichtung 60 des Triebwerks 2 an den Endanschlag 70 bei einer Druckbeaufschlagung der Zusatzstellkolbeneinrichtung 80 mit Druckmittel aus dem Druckmittelspeicher 30 kann mit dem Mittel 105 die Verstellgeschwindigkeit der Verdrängervolumenstelleinrichtung 60 begrenzt werden, um Beschädigungen an dem Endanschlag 70 oder der Verdrängervolumenstelleinrichtung 60 zu vermeiden.

Da keine zusätzlichen Druckminderventile oder Rückschlagventile wie bei einer Versorgung der Stellkolbeneinrichtung 60 mit einem aus dem Druckmittelspeicher 30 erzeugten Speisedruckniveau bei dem erfindungsgemäßen Triebwerk 2 erforderlich sind, ergibt sich ein geringer Bauaufwand und es ergibt sich ein geringer Bauraumbedarf für einen Ventilblock 100, in dem die für den Motorbetrieb des Triebwerks 2 erforderlichen Ventile (Steuerventil 40, Ladeventileinrichtung 33 und gegebenenfalls das Druckbegrenzungsventil 35) angeordnet sind.

Die Erfindung ist nicht auf die dargestellten Ausführungsbeispiele beschränkt. Das erfindungsgemäße Triebwerk 2 kann als hydraulischer Starter des Verbrennungsmotors auch in Fahrzeugen eingesetzt werden, die keine Arbeitshydraulik aufweisen. Das Triebwerk 2 dient dann im Pumpenbetrieb lediglich zum Laden des Druckmittelspeichers 30.

Die triebliche Verbindung des Triebwerks 2 mit dem Verbrennungsmotor 3 kann gemäß den Figuren koaxial zu der von der Kurbelwelle gebildeten Abtriebswelle 7 des Verbrennungsmotors 3 erfolgen. Alternativ kann das Triebwerk 2 im Sinne eines Nebenantrieb über eine Getriebeeinrichtung, beispielsweise ein Stirnradgetriebe, ein Riemengetriebe oder ein Kettengetriebe, mit dem Verbrennungsmotor 3 trieblich verbunden sein oder alternativ auf einen bereits vorhandenen Nebenantrieb des Verbrennungsmotors 3 einwirken.

## Patentansprüche

1. Hydrostatisches Triebwerk (2), das als Verstellmaschine mit einem verstellbaren, insbesondere stufenlos verstellbaren, Verdrängervolumen ausgebildet ist und als Pumpe und Motor betreibbar und mit einem Verbrennungsmotor (3) trieblich verbunden ist, wobei das Triebwerk (2) im Pumpenbetrieb mit einer Saugseite (S) Druckmittel aus einem Behälter (9) ansaugt und in eine Förderseite (P) fördert und wobei das Triebwerk (2) im Motorbetrieb als hydraulischer Starter zum Starten des Verbrennungsmotors (3) ausgebildet ist, wobei dem Triebwerk (2) im Motorbetrieb an der Saugseite (S) Druckmittel aus einem Druckmittelspeicher (30) zuführbar ist, wobei das Verdrängervolumen des Triebwerks (2) mittels einer Verdrängervolumenstelleinrichtung (60) einstellbar ist, die mit einer aus einem Speisedruckkreis (23) mit Druckmittel versorgten Stellkolbeneinrichtung (61) betätigbar ist, **dadurch gekennzeichnet, dass** das Triebwerk (2) als einseitig verstellbares Triebwerk ausgebildet ist, bei dem die Verdrängervolumenstelleinrichtung (60) ausgehend von einer Stellung mit minimalem Verdrängervolumen in eine Stellrichtung auf eine Stellung mit maximalem Verdrängervolumen verstellbar ist, und dass eine Zusatzstellkolbeneinrichtung (80) vorgesehen ist, die mit der Verdrängervolumenstelleinrichtung (60) zum Verstellen des Verdrängervolumens des Triebwerks (2) in Wirkverbindung steht und die unmittelbar von dem in dem Druckmittelspeicher (30) anstehenden Druck beaufschlagbar ist, wobei die Verdrängervolumenstelleinrichtung (60) des Triebwerks (2) von der Stellkolbeneinrichtung (61) und der Zusatzstellkolbeneinrichtung (80) ausgehend von der Stellung mit minimalem Verdrängervolumen in die Stellrichtung verstellbar ist und wobei durch eine Verbindung der Zusatzstellkolbeneinrichtung (80) mit dem Druckmittelspeicher (30) das Triebwerk (2) zum Starten des Verbrennungsmotors (3) in Richtung einer Erhöhung des Verdrängervolumens verstellbar ist.

2. Hydrostatisches Triebwerk nach Anspruch 1, **dadurch gekennzeichnet, dass** eine druckbeaufschlagte Kolbenfläche (83) der Zusatzstellkolbeneinrichtung (80) gegenüber einer druckbeaufschlagten Kolbenfläche (67) der Stellkolbeneinrichtung (61) verringert ist.

3. Hydrostatisches Triebwerk nach Anspruch 1 oder 2, **dadurch gekennzeichnet, dass** die Zusatzstellkolbeneinrichtung (80) bei einer Verbindung mit dem Druckmittelspeicher (30) die Verdrängervolumenstelleinrichtung (60) auf einen Endanschlag (70) mit maximalem Verdrängervolumen verstellt.

4. Hydrostatisches Triebwerk nach einem der Ansprüche 1 bis 3, **dadurch gekennzeichnet, dass** zur Steuerung der Verbindung des Druckmittelspeichers (30) mit der Saugseite (S) des Triebwerks (2) ein Steuerventil (40), insbesondere elektrisch betätigbares Steuerventil, vorgesehen ist, wobei das Steuerventil (40) die Verbindung der Zusatzstellkolbeneinrichtung (80) mit dem Druckmittelspeicher (30) steuert.

5. Hydrostatisches Triebwerk nach Anspruch 4, **dadurch gekennzeichnet, dass** zu einem Startvorgang des abgestellten Verbrennungsmotors (3) mittels des Steuerventils (40) die Saugseite (S) des Triebwerks (2) mit dem Druckmittelspeicher (30) verbunden ist und die Zusatzstellkolbeneinrichtung (80) mit dem Druckmittelspeicher (30) verbunden ist.

6. Hydrostatisches Triebwerk nach Anspruch 4 oder 5, **dadurch gekennzeichnet, dass** der Druckmittelspeicher (30) mit der Saugseite (S) des Triebwerks (2) mittels einer Verbindungsleitung (45) in Verbindung steht, in der das Steuerventil (40) angeordnet ist, wobei zur Beaufschlagung der Zusatzstellkolbeneinrichtung (80) mit Druckmittel aus dem Druckmittelspeicher (30) eine Druckmittelleitung (82) vorgesehen ist, die stromab des Steuerventils (45) mit der Verbindungsleitung (45) verbunden ist.

7. Hydrostatisches Triebwerk nach Anspruch 6, **dadurch gekennzeichnet, dass** in der zu der Zusatzstellkolbeneinrichtung (80) geführten Druckmittelleitung (82) ein die Verstellgeschwindigkeit der Verdrängervolumenstelleinrichtung (60) beeinflussendes Mittel (105) angeordnet ist.

8. Hydrostatisches Triebwerk nach einem der Ansprüche 1 bis 7, **dadurch gekennzeichnet, dass** die Zusatzstellkolbeneinrichtung (80) mit der mit der Verdrängervolumenstelleinrichtung (60) in Wirkverbindung stehenden Stellkolbeneinrichtung (61) oder der Verdrängervolumenstelleinrichtung (60) oder einer die Stellkolbeneinrichtung (61) mit der Verdrängervolumenstelleinrichtung (60) verbindenden Stelleinrichtungskomponente in Wirkverbindung steht.

9. Hydrostatisches Triebwerk nach einem der Ansprüche 1 bis 8, **dadurch gekennzeichnet, dass** die Zusatzstellkolbeneinrichtung (80) in axialer Verlängerung der Stellkolbeneinrichtung (61) angeordnet ist und mit der Stellkolbeneinrichtung (61) in Wirkverbindung steht, wobei die Zusatzstellkolbeneinrichtung (80) koaxial zu der Stellkolbeneinrichtung (61) angeordnet und sich eine ausfahrende Kolbenstange der Zusatzstellkolbeneinrichtung (80) in einen Stelldruckraum (61a) der Zusatzstellkolbeneinrichtung (80) erstreckt und auf einen Stellkolben der Stellkolbeneinrichtung (61) wirkt, oder wobei die Zusatzstellkolbeneinrichtung (80) von mehreren Zusatzstellkolben gebildet ist, die auf einem Teilkreis angeordnet sind und auf die Stellkolbeneinrichtung (61) wirken.

10. Hydrostatisches Triebwerk nach Anspruch 8 oder 9, **dadurch gekennzeichnet, dass** die Zusatzstellkolbeneinrichtung (80) mit der Stellkolbeneinrichtung (61) oder der Verdrängervolumenstelleinrichtung (60) oder der Stelleinrichtungskomponente über ein formschlüssiges Verbindungsmittel (85) fest verbunden ist.

11. Hydrostatisches Triebwerk nach Anspruch 10, **dadurch gekennzeichnet, dass** das formschlüssige Verbindungsmittel (85) als Gelenkverbindung (86), insbesondere als sphärisches Gelenk oder als Drehgelenk, ausgebildet ist.

12. Hydrostatisches Triebwerk nach Anspruch 8 oder 9, **dadurch gekennzeichnet, dass** die Zusatzstellkolbeneinrichtung (80) an der Stellkolbeneinrichtung (61) oder der Verdrängervolumenstelleinrichtung (60) oder der Stelleinrichtungskomponente lose anliegt.

13. Hydrostatisches Triebwerk nach Anspruch 12, **dadurch gekennzeichnet, dass** die Zusatzstellkolbeneinrichtung (80) von einer Federeinrichtung (91), insbesondere einer Druckfeder, beaufschlagt ist, die die Zusatzstellkolbeneinrichtung (80) in Anlage an die Stellkolbeneinrichtung (61) oder die Verdrängervolumenstelleinrichtung (60) oder die Stelleinrichtungskomponente hält.

14. Hydrostatisches Triebwerk nach einem der Ansprüche 1 bis 13, **dadurch gekennzeichnet, dass** die Verdrängervolumenstelleinrichtung (60) mittels einer Federeinrichtung (66) in Richtung eines minimalen Verdrängervolumens beaufschlagt ist.

15. Hydrostatisches Triebwerk nach einem der Ansprüche 1 bis 14, **dadurch gekennzeichnet, dass** das Triebwerk (2) als Axialkolbenmaschine in Schrägscheibenbauweise ausgebildet ist.

16. Antriebsstrang eines Fahrzeugs, insbesondere einer mobilen Arbeitsmaschine, mit einem von einem Verbrennungsmotor (3) angetriebenen hydrostatischen Triebwerk (2) nach einem der vorangegangenen Ansprüche, wobei das Triebwerk (2) im Motorbetrieb einen hydraulischen Starter einer Start-Stopp-Funktion des Verbrennungsmotors (3) bildet und im Pumpenbetrieb einen Ladebetrieb des Druckmittelspeichers (30) ermöglicht.

17. Antriebsstrang nach Anspruch 16, **dadurch gekennzeichnet, dass** das Triebwerk (2) im Motorbetrieb als hydraulischer Booster-Antrieb dient.

18. Antriebsstrang nach Anspruch 16 oder 17, **dadurch gekennzeichnet, dass** das Fahrzeug ein Arbeitshydrauliksystem (5) aufweist und das Triebwerk (2) im Pumpenbetrieb die Arbeitshydrauliksystem (5) des Fahrzeugs mit Druckmittel versorgt.

19. Fahrzeug mit einem Antriebsstrang nach einem der Ansprüche 16 bis 18.

## Claims

1. Hydrostatic power unit (2), which is designed as an adjustable machine with an adjustable, in particular continuously adjustable, displacement volume and which is operable as a pump and as a motor and which is connected in terms of drive to an internal combustion engine (3), wherein the power unit (2), in the pump mode, draws pressure medium by way of a suction side (S) out of a tank (9) and conveys said pressure medium into a delivery side (P), and wherein the power unit (2), in the motor mode, is designed as a hydraulic starter for starting the internal combustion engine (3), wherein pressure medium can be fed from a pressure medium accumulator (30) to the power unit (2) in the motor mode at the suction side (S), wherein the displacement volume of the power unit (2) is settable by means of a displacement volume setting device (60) which is actuatable by means of a setting piston device (61) which is supplied with pressure medium from a feed pressure circuit (23), **characterized in that** the power unit (2) is designed as a unilaterally adjustable power unit in the case of which the displacement volume setting device (60) is adjustable from a position with minimum displacement volume in a setting direction to a position with maximum displacement volume, and **in that** an auxiliary setting piston device (80) is provided which is operatively connected to the displacement volume setting device (60) for the adjustment of the displacement volume of the power unit (2) and which can be acted on directly by the pressure prevailing in the pressure medium accumulator (30), wherein the displacement volume setting device (60) of the power unit (2) is adjustable by the setting piston device (61) and the auxiliary setting piston device (80) from the position with minimum displacement volume in the setting direction, and wherein, by means of a connection of the auxiliary setting piston device (80) to the pressure medium accumulator (30), the power unit (2) is, for the starting of the internal combustion engine (3), adjustable in the direction of an increase of the displacement volume.

2. Hydrostatic power unit according to Claim 1, **characterized in that** a pressurized piston surface (83) of the auxiliary setting piston device (80) is reduced in relation to a pressurized piston surface (67) of the setting piston device (61).

3. Hydrostatic power unit according to Claim 1 or 2, **characterized in that** the auxiliary setting piston device (80), in the case of a connection to the pressure medium accumulator (30), sets the displacement volume setting device (60) to an end stop (70) with maximum displacement volume.

4. Hydrostatic power unit according to one of Claims 1 to 3, **characterized in that**, for the control of the connection of the pressure medium accumulator (30) to the suction side (S) of the power unit (2), a control valve (40), in particular an electrically actuatable control valve, is provided, wherein the control valve (40) controls the connection of the auxiliary setting piston device (80) to the pressure medium accumulator (30) .

5. Hydrostatic power unit according to Claim 4, **characterized in that**, for a starting process of the shut-down internal combustion engine (3) by means of the control valve (40), the suction side (S) of the power unit (2) is connected to the pressure medium accumulator (30), and the auxiliary setting piston device (80) is connected to the pressure medium accumulator (30).

6. Hydrostatic power unit according to Claim 4 or 5, **characterized in that** the pressure medium accumulator (30) is connected to the suction side (S) of the power unit (2) by means of a connecting line (45) in which the control valve (40) is arranged, wherein, for the charging of the auxiliary setting piston device (80) with pressure medium from the pressure medium accumulator (30), a pressure medium line (82) is provided which is connected to the connecting line (45) downstream of the control valve (45).

7. Hydrostatic power unit according to Claim 6, **characterized in that**, in the pressure medium line (82) which leads to the auxiliary setting piston device (80), there is arranged a means (105) which influences the adjustment speed of the displacement volume setting device (60).

8. Hydrostatic power unit according to one of Claims 1 to 7, **characterized in that** the auxiliary setting piston device (80) is operatively connected to the setting piston device (61) operatively connected to the displacement volume setting device (60), or is operatively connected to the displacement volume setting device (60), or is operatively connected to a setting device component which connects the setting piston device (61) to the displacement volume setting device (60) .

9. Hydrostatic power unit according to one of Claims 1 to 8, **characterized in that** the auxiliary setting piston device (80) is arranged as an axial elongation of the setting piston device (61) and is operatively connected to the setting piston device (61), wherein the auxiliary setting piston device (80) is arranged coaxially with respect to the setting piston device (61), and an extending piston rod of the auxiliary setting piston device (80) extends into a setting pressure chamber (61a) of the auxiliary setting piston device (80) and acts on a setting piston of the setting piston device (61), or wherein the auxiliary setting piston device (80) is formed by multiple auxiliary setting pistons which are arranged on a pitch circle and which act on the setting piston device (61) .

10. Hydrostatic power unit according to Claim 8 or 9, **characterized in that** the auxiliary setting piston device (80) is fixedly connected to the setting piston device (61) or to the displacement volume setting device (60) or to the setting device component by a positively locking connecting means (85) .

11. Hydrostatic power unit according to Claim 10, **characterized in that** the positively locking connecting means (85) is formed as an articulated connection (86), in particular as a spherical joint or as a rotary joint.

12. Hydrostatic power unit according to Claim 8 or 9, **characterized in that** the auxiliary setting piston device (80) bears loosely against the setting piston device (61) or against the displacement volume setting device (60) or against the setting device component.

13. Hydrostatic power unit according to Claim 12, **characterized in that** the auxiliary setting piston device (80) is acted on by a spring device (91), in particular a compression spring, which holds the auxiliary setting piston device (80) in abutment against the setting piston device (61) or against the displacement volume setting device (60) or against the setting device component.

14. Hydrostatic power unit according to one of Claims 1 to 13, **characterized in that** the displacement volume setting device (60) is acted on in the direction of a minimum displacement volume by means of a spring device (66).

15. Hydrostatic power unit according to one of Claims 1 to 14, **characterized in that** the power unit (2) is designed as an axial piston machine of swashplate type of construction.

16. Drivetrain of a vehicle, in particular of a mobile working machine, having a hydrostatic power unit (2) according to one of the preceding claims which is driven by an internal combustion engine (3), wherein the power unit (2), in the motor mode, forms a hydraulic starter of a start-stop function of the internal combustion engine (3) and, in the pump mode, permits a charging mode of the pressure medium accumulator (30).

17. Drivetrain according to Claim 16, **characterized in that** the power unit (2), in the motor mode, serves as a hydraulic booster drive.

18. Drivetrain according to Claim 16 or 17, **characterized in that** the vehicle has a working hydraulic system (5), and the power unit (2), in the pump mode, supplies pressure medium to the working hydraulic system (5) of the vehicle.

19. Vehicle having a drivetrain according to one of Claims 16 to 18.

## Revendications

1. Moteur hydrostatique (2), qui est configuré comme machine de déplacement avec un volume de déplacement réglable, en particulier réglable en continu, et qui peut fonctionner en pompe et en moteur et qui est relié cinématiquement à un moteur à combustion interne (3), dans lequel le moteur (2) fonctionnant en pompe aspire avec un côté d'aspiration (S) du fluide sous pression hors d'un réservoir (9) et le refoule dans un côté de refoulement (P) et dans lequel le moteur (2) fonctionnant en moteur est configuré en démarreur hydraulique pour faire démarrer le moteur à combustion interne (3), dans lequel du fluide sous pression peut en fonctionnement en moteur être envoyé au moteur (2) sur le côté d'aspiration (S) à partir d'un réservoir de fluide sous pression (30), dans lequel le volume de déplacement du moteur (2) peut être réglé au moyen d'un dispositif de réglage de volume de déplacement (60), qui peut être actionné avec un dispositif de piston de réglage (61) alimenté avec du fluide sous pression à partir d'un circuit de pression d'alimentation (23), **caractérisé en ce que** le moteur (2) est réalisé sous la forme d'un moteur réglable d'un côté, dans lequel le dispositif de réglage de volume de déplacement (60) est réglable à partir d'une position avec un volume de déplacement minimal jusqu'à une position avec un volume de déplacement maximal, et **en ce qu'**il est prévu un dispositif de piston de réglage supplémentaire (80), qui est en liaison active avec le dispositif de réglage de volume de déplacement (60) pour le réglage du volume de déplacement du moteur (2) et qui peut être soumis directement à la pression régnant dans le réservoir de fluide sous pression (30), dans lequel le dispositif de réglage de volume de déplacement (60) du moteur (2) peut être réglé par le dispositif de piston de réglage (61) et le dispositif de piston de réglage supplémentaire (80) à partir de la position avec un volume de déplacement minimal dans la direction de réglage et dans lequel, par une communication du dispositif de piston de réglage supplémentaire (80) avec le réservoir de fluide sous pression (30), le moteur (2) est réglable en direction d'une augmentation du volume de déplacement pour faire démarrer le moteur à combustion interne (3).

2. Moteur hydrostatique selon la revendication 1, **caractérisé en ce qu'**une face de piston (83) du dispositif de piston de réglage supplémentaire (80) soumise à la pression est réduite par rapport à une face de piston (67) du dispositif de piston de réglage (61) soumise à la pression.

3. Moteur hydrostatique selon la revendication 1 ou 2, **caractérisé en ce que** le dispositif de piston de réglage supplémentaire (80) déplace le dispositif de réglage de volume de déplacement (60) sur une butée d'extrémité (70) avec un volume de déplacement maximal lors d'une communication avec le réservoir de fluide sous pression (30).

4. Moteur hydrostatique selon l'une quelconque des revendications 1 à 3, **caractérisé en ce qu'**il est prévu une soupape de commande (40), en particulier une soupape de commande à commande électrique, pour la commande de la communication du réservoir de fluide sous pression (30) avec le côté d'aspiration (S) du moteur (2), dans lequel la soupape de commande (40) commande la communication du dispositif de piston de réglage supplémentaire (80) avec le réservoir de fluide sous pression (30).

5. Moteur hydrostatique selon la revendication 4, **caractérisé en ce que** pour une opération de démarrage du moteur à combustion interne arrêté (3), le côté d'aspiration (S) du moteur hydrostatique (2) est mis en communication avec le réservoir de fluide sous pression (30) et le dispositif de piston de réglage supplémentaire (80) est mis en communication avec le réservoir de fluide sous pression (30) au moyen de la soupape de commande (40).

6. Moteur hydrostatique selon la revendication 4 ou 5, **caractérisé en ce que** le réservoir de fluide sous pression (30) est en communication avec le côté d'aspiration (S) du moteur (2) au moyen d'une conduite de liaison (45), dans laquelle la soupape de commande (40) est disposée, dans lequel il est prévu, pour alimenter le dispositif de piston de réglage supplémentaire (80) avec du fluide sous pression à partir du réservoir de fluide sous pression (30), une conduite de fluide sous pression (82), qui est raccordée à la conduite de liaison (45) en aval de la soupape de commande (45).

7. Moteur hydrostatique selon la revendication 6, **caractérisé en ce qu'**un moyen (105) influençant la vitesse de déplacement du dispositif de réglage de volume de déplacement (60) est disposé dans la conduite de fluide sous pression (82) menée au dispositif de piston de réglage supplémentaire (80).

8. Moteur hydrostatique selon l'une quelconque des revendications 1 à 7, **caractérisé en ce que** le dispositif de piston de réglage supplémentaire (80) est en liaison active avec le dispositif de piston de réglage (61) se trouvant en liaison active avec le dispositif de réglage de volume de déplacement (60) ou avec le dispositif de réglage de volume de déplacement (60) ou avec un composant de dispositif de réglage reliant le dispositif de piston de réglage (61) au dispositif de réglage de volume de déplacement (60).

9. Moteur hydrostatique selon l'une quelconque des revendications 1 à 8, **caractérisé en ce que** le dispositif de piston de réglage supplémentaire (80) est disposé dans le prolongement axial du dispositif de piston de réglage (61) et est en liaison active avec le dispositif de piston de réglage (61), dans lequel le dispositif de piston de réglage supplémentaire (80) est disposé de façon coaxiale au dispositif de piston de réglage (61) et une tige de piston sortante du dispositif de piston de réglage supplémentaire (80) s'étend dans une chambre de pression de réglage (61a) du dispositif de piston de réglage supplémentaire (80) et agit sur un piston de réglage du dispositif de piston de réglage (61), ou dans lequel le dispositif de piston de réglage supplémentaire (80) est formé de plusieurs pistons de réglage supplémentaires, qui sont disposés sur un cercle primitif et qui agissent sur le dispositif de piston de réglage (61).

10. Moteur hydrostatique selon la revendication 8 ou 9, **caractérisé en ce que** le dispositif de piston de réglage supplémentaire (80) est relié de façon fixe au dispositif de piston de réglage (61) ou au dispositif de réglage de volume de déplacement (60) ou au composant de dispositif de réglage par un moyen de liaison par emboîtement (85).

11. Moteur hydrostatique selon la revendication 10, **caractérisé en ce que** le moyen de liaison par emboîtement (85) est réalisé sous la forme d'une liaison articulée, en particulier d'une articulation sphérique ou d'une articulation rotative.

12. Moteur hydrostatique selon la revendication 8 ou 9, **caractérisé en ce que** le dispositif de piston de réglage supplémentaire (80) repose librement sur le dispositif de piston de réglage (61) ou sur le dispositif de réglage de volume de déplacement (60) ou sur le composant de dispositif de réglage.

13. Moteur hydrostatique selon la revendication 12, **caractérisé en ce que** le dispositif de piston de réglage supplémentaire (80) est soumis à un dispositif à ressort (91), en particulier un ressort de pression, qui maintient le dispositif de piston de réglage supplémentaire (80) en appui sur le dispositif de piston de réglage (61) ou sur le dispositif de réglage de volume de déplacement (60) ou sur le composant de dispositif de réglage.

14. Moteur hydrostatique selon l'une quelconque des revendications 1 à 13, **caractérisé en ce que** le dispositif de réglage de volume de déplacement (60) est poussé en direction d'un volume de déplacement minimal au moyen d'un dispositif à ressort (66).

15. Moteur hydrostatique selon l'une quelconque des revendications 1 à 14, **caractérisé en ce que** le moteur (2) est réalisé sous la forme d'une machine à piston axial dans un modèle de construction à disque incliné.

16. Chaîne cinématique d'un véhicule, en particulier d'une machine de travail mobile, avec un moteur hydrostatique (2) selon l'une quelconque des revendications précédentes entraîné par un moteur à combustion interne (3), dans laquelle le moteur (2) en mode moteur forme un démarreur hydrostatique d'une fonction Marche-Arrêt du moteur à combustion interne (3) et en mode pompe permet un fonctionnement de charge du réservoir de fluide sous pression (30).

17. Chaîne cinématique selon la revendication 16, **caractérisée en ce que** le moteur (2) en mode moteur sert d'entraînement hydraulique d'appoint.

18. Chaîne cinématique selon la revendication 16 ou 17, **caractérisée en ce que** le véhicule présente un système de travail hydraulique (5) et le moteur (2) en mode pompe alimente le système de travail hydraulique (5) du véhicule en fluide sous pression.

19. Véhicule avec une chaîne cinématique selon l'une quelconque des revendications 16 à 18.
